# EUROPEAN PATENT SPECIFICATION

(11) **EP 0 473 213 B1**
(45) Date of publication and mention of the grant of the patent: **30.03.1994**
(21) Application number: 91201924.7
(22) Date of filing: 22.07.1991
(51) Int. Cl.: F16L 3/12

(54) **Fixing element for a pipe, in particular for the drainage of rainwater**
Befestigungselement für ein Rohr, insbesondere für die Abfuhr von Regenwasser
Elément de fixation pour tuyau, en particulier pour le drainage des eaux de pluie

(30) Priority: 29.08.1990 NL 9001896
(43) Date of publication of application: 04.03.1992
(73) Proprietor: J.H. DE WIT EN ZONEN B.V., NL-5705 AB Helmond (NL)
(72) Inventor: Thoolen, Wilhelm Franciscus, NL-6077 CG Sint Odilienberg (NL)
(74) Representative: de Bruijn, Leendert C.

(56) References cited:
- DE-A- 3 533 951
- FR-A- 2 572 488
- NL-A- 8 502 283

## Description

The invention relates to a fixing element for a pipe, in particular a pipe for the drainage of rainwater, comprising a base part of plastic, provided with a through hole, through which a masonry plug can extend, and by means of which plug the base part can be fixed against a wall by hammering in with a hammer, as well as a part which is integral with the base part and is hingedly connected to the base part.

Such a fixing element is known from Dutch Patent Application 8,501,283 of Applicants, in particular Figs. 3 and 4.

In this case the base part comprises two parts which are hingedly connected thereto, and which grip round the pipe and snap into each other. The hinge pins cross the through hole in the base part at angles of 90°.

This fixing element is not vandal-proof. In the fixing of rainwater pipes it is necessary for a closed clip to grip round the pipe.

That is why plastic fixing elements have not been used hitherto for rainwater pipes.

The most common fixing element for a rainwater pipe is known from DE-A-3533951, and is made entirely of metal and is formed by a metal pin which can be hammered into the wall or the like, and which is provided with an opening at the end projecting beyond the wall. A divided metal clip is placed around the pipe, having at the dividing point two parallel lips, each of which is also provided with an opening. The two openings are placed in line with each other and a bolt is passed through them and tightened with a nut. The two lips are thus pulled towards each other, so that the clip is clamped tightly round the pipe.

These very common fixing elements are expensive and labour intensive in fitting.

The object of the invention is to provide a fixing element which is made entirely of plastic, and which suitable for the fixing of rainwater pipes.

The object is achieved according to the invention in that a separate plastic clip is provided which can extend round the pipe and which is in the form of a strip having a lip at each end, in that the hinged axis of the part connected to the base part runs parallel to the central axis of the through hole in the base part, the hinged part being in the form of a U-shaped cap part, and in the working position holding the lips pressed against the two sides of the base part and locking them by means of grooves and ribs provided on the clip and the base part respectively which run transverse with respect to the longitudinal axis of the strip respectively the hole axis.

In the fitted state a completely closed clip thus extends found the rainwater pipe, precisely as in the case of the metal fixing element, but the advantages of fixing by means of a masonry plug and being made of plastic are retained.

The invention will be explained in greater detail with reference to two perspective drawings, in which:
Fig. 1 shows the fixing element in the ready position;
Fig. 2 shows the clip;
Fig. 3 shows the base part with the hinged part.

The base part 1 contains a through hole, through which the plug 2 of a masonry plug can be driven, the nail of which is indicated by 3.

A cap part 5 is connected to the base part 1 by means of a hinge edge 4 running parallel to the central axis of the through hole. Base part 1 and cap part 5 are made of plastic in one piece.

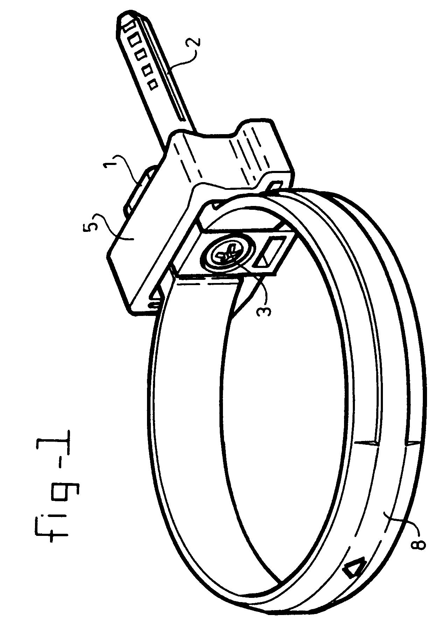

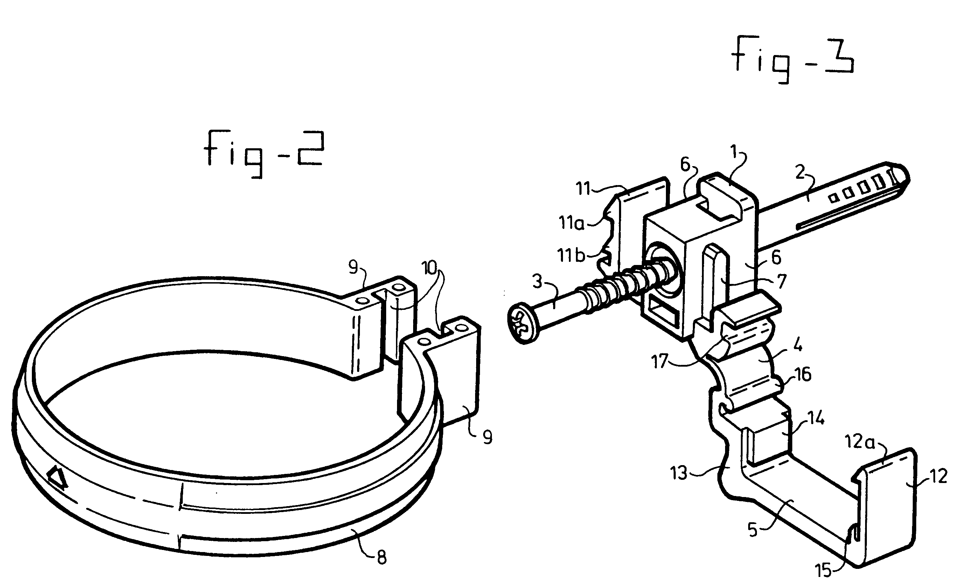

The base part 1 contains two parallel sides 6, each provided with a rib. Only the rib 7 can be seen in Fig. 2.

The clip 8, which is also made of plastic, is divided and is provided with lips 9 with grooves 10 in them (see Fig. 2). These grooves 10 go with the ribs 7 on the base part 1.

After placing of the grooves 10 over the ribs 7, the cap part 5 is flapped over the base part 1 and the clip 8 is locked.

In order to ensure that a firm connection is obtained between clip 8 and base part 1, both the base part 1 and the cap part 5 must be designed specially (see in particular Fig. 3).

At some distance from the left side 6 of the base part 1 is a snap part 11 which can interact with a snap part 12 on the cap part 5. The snap part 11 contains two snap edges 11a and 11b.

The single snap edge 12a of the snap part 12 first grips behind the snap edge 11a after flapping over of the cap part 5, for a provisional fixing, and then behind the snap edge 11b after pressing through, for the final fixing.

The other leg 13 of the U-shaped cap part has a pressure part 14 which in the final fixing presses the one lip 9 of the clip 8 tightly against the appropriate side 6 of the base part.

The leg 12 has a pressure edge 15 for the other lip 9 of the clip 8.

An edge 16 with circular cross-section is also present between the leg 13 and the hinge 4, which edge in the final fixing snaps into a corresponding groove 17 of the base part. Forces which are active in the axial direction of the rainwater pipe are absorbed in this way.

## Claims

1. Fixing element for a pipe, in particular a pipe for the drainage of rainwater, comprising a base part (1) of plastic, provided with a through hole, through which a masonry plug (2) can extend, and by means of which the base part (1) can be fixed against a wall by hammering in with a hammer, as well as with a part (5) which is integral with the base part (1) and is hingedly connected to the base part (1), characterised in that a separate plastic clip (8) is provided which can extend round the pipe and which is in the form of a strip having a lip (9) at each end, in that the hinged axis (4) of the part (5) connected to the base part (1) runs parallel to the central axis of the through hole in the base part (1), the hinged part (5) being in the form of a U-shaped cap part, and in the working position holding the lips (9) pressed against the two sides (6) of the base part (1) and locking them by means of grooves (10) and ribs (7) provided on the clip and the base part respectively which run transverse with respect to the longitudinal axis of the strip respectively the hole axis.

2. Fixing element according to claim 1, characterised in that the cap part (5) and the base part (1) are provided near the hinge (4) with means (16, 17) which fit into each other and which can absorb forces parallel to the central axis of the pipe.

3. Fixing element according to claim 1 or 2, characterised in that the legs of the cap part (5) are provided on the insides with raised parts (14, 15) which press the lips (9) against the sides (6) of the base part (1).

## Patentansprüche

1. Befestigungselement für ein Rohr, insbesondere ein Rohr zur Abfuhr von Regenwasser mit einem Basisteil (1) aus Kunststoff, der mit einem Durchgangsloch versehen ist, durch das sich ein Wanddübel (2) erstrecken kann, mittels dessen der Basisteil (1) durch Einhämmern mit einem Hammer an einer Wand befestigt werden kann, sowie mit einem in einem Stück mit dem Basisteil (1) gebildeten Teil (5), das schwenkbar mit dem Basisteil (1) verbunden ist, dadurch gekennzeichnet, daß eine getrennte Kunststoffschelle (8) vorgesehen ist, die sich um das Rohr erstrecken kann und die Form eines Streifens mit einer Lippe (9) an jedem Ende aufweist, daß die Schwenkachse (4) des mit dem Basisteil (1) verbundenen Teils (5) parallel zu der zentralen Achse des Durchgangslochs in dem Basisteil (1) verläuft, wobei der schwenkbare Teil (5) die Form eines U-förmigen Kappenteils aufweist und in der Arbeitsposition die Lippen (9) gegen die beiden Seiten (6) des Basisteils (1) gedrückt hält und sie mittels an der Schelle bzw. dem Basisteil vorgesehenen Nuten (10) und Rippen (7) verriegelt, die bezüglich der Längsachse des Streifens bzw. der ganzen Achse quer verlaufen.

2. Befestigungselement nach Anspruch 1, dadurch gekennzeichnet, daß der Kappenteil (5) und der Basisteil (1) nahe dem Scharnier (4) mit Mitteln (16, 17) versehen sind, die ineinander passen und zur zentralen Achse des Rohrs parallele Kräfte aufnehmen kann.

3. Befestigungselement nach Anspruch 1 oder 2, dadurch gekennzeichnet, daß die Schenkel des Kappenteile (5) an der Innenseite mit erhöhten Teilen (14, 15) versehen sind, die die Lippen (9) gegen die Seiten (6) des Basisteils (1) pressen.

## Revendications

1. Elément de fixation pour un tuyau, en particulier un tuyau pour l'évacuation des eaux de pluie, comprenant une partie base (1) en matière plastique, pourvue d'un trou traversant à travers lequel une cheville (2) pour maçonnerie peut s'étendre et au moyen de laquelle la partie base (1) peut être fixée sur un mur à l'aide d'un marteau, ainsi qu'une partie (5) qui fait corps avec la partie base (1) et qui est articulée sur la partie base (1), caractérisé en ce qu'il comprend un collier séparé (8) en matière plastique qui peut s'étendre autour du tuyau et qui se présente sous la forme d'une bande comportant une lèvre (9) à chaque extrémité, et en ce que l'axe d'articulation (4) de la partie (5) raccordée à la partie base (1) s'étend parallèlement à l'axe central du trou traversant de la partie base (1), la partie articulée (5) se présentant sous la forme d'une partie étrier en forme de U et, dans la position active, maintient les lèvres (9) pressées contre les deux côtés (6) de la partie base (1) et les bloque au moyen de rainures (10) et de nervures (7) formées sur l;e collier et la partie base, respectivement s'étendant transversalement par rapport à l'axe longitudinal de la bande et à l'axe du trou, respectivement.

2. Elément de fixation selon la revendication 1, caractérisé en ce que la partie étrier (5) et la partie base (1) se trouvent près de la charnière (4) avec des moyens (16, 17) qui s'encastrent l'un dans l'autre et qui peuvent absorber les forces parallèles à l'axe central du tuyau.

3. Elément de fixation selon la revendication 1 ou 2, caractérisé en ce que les branches de la partie étrier (5) comportent sur leurs côtés intérieurs des parties surélevées (14, 15) qui pressent les lèvres (9) contre les côtés (6) de la partie base (1).
